(19) Europäisches Patentamt
European Patent Office
Office européen des brevets

(11) Publication number: **0 072 024**
**A2**

(12) **EUROPEAN PATENT APPLICATION**

(21) Application number: **82107218.8**

(22) Date of filing: **10.08.82**

(51) Int. Cl.³: **C 08 F 299/04**, C 08 J 9/08, C 08 G 18/68, C 08 J 5/04

(30) Priority: **10.08.81 US 291315**
**10.08.81 US 291399**

(43) Date of publication of application: **16.02.83**
**Bulletin 83/7**

(84) Designated Contracting States: **AT BE CH DE FR GB IT LI LU NL SE**

(71) Applicant: **WHITNEY & COMPANY, INC., 21 Depot Road, Stratham, NH 03885 (US)**

(72) Inventor: **Saidla, Glen Whitney, 21 Depot Road, Stratham New Hampshire 03885 (US)**

(74) Representative: **Heidrich, Udo, Dr. jur., Dipl.-Phys., Franziskanerstrasse 30, D-8000 München 80 (DE)**

(54) **Molding of unsaturated polyester.**

(57) The method of curing unsaturated polyester with a hydroperoxide-based curing agent is improved by employing isocyanate and at least one isocyanate-reactive accelerator that is exothermically reactive with the isocyanate to generate heat to accelerate the gellation und curing reaction between the polyester and its curing agent. Dilution of the polyester with a monomer cross-linking agent, especially styrene, enables impingement mixing under high pressure and rapid filling of molds. Preferably an excess of isocyanate reacts, commencing prior to gellation of the resin, with a component of the mixture, preferably the hydroperoxide, to cause formation of small gas bubbles to prevent shrinkage and, where desired, to expand the mixture. An improved curing agent for the unsaturated polyester comprises a buffered equilibrium system of a limited quantity of un-ionized hydroperoxide and a salt of the hydroperoxide that is soluble in the resin, preferably formed by reacting hydroperoxide with an amine that serves as a weak base. By selection of an amine that is also reactive with isocyanate, the amine can perform in both buffering and polyester cure accelerating actions. A thixotropic additive enables use of a high level of reinforcement fibres in the fluid resin and a heat conductive additive permits molding of thick sections while achieving good surface finish.

EP 0 072 024 A2

# MOLDING OF UNSATURATED POLYESTER

## Background of the Invention

This invention relates to systems for forming molded articles of unsaturated polyester resin.

Forming systems for thermosetting resins using closed molds take a number of forms, e.g. reaction injection molding (RIM) or resin transfer molding (RTM). In RIM systems, a reactive mixture is injected into a mold and the reaction and gellation are completed quickly, typically demolding being possible between one or two minutes after injection.

Prior RIM systems have mostly employed polyurethane as the major component, but polyurethane has certain known disadvantages, e.g. high resin cost, poor heat distortion properties and low modulus of elasticity. Urethane components must also be combined in exact stoichiometric proportions, which requires accurate and expensive handling equipment. Also, the level of reinforcing fibres that can be included in the fluid mixture is limited and the fibres do not remain well dispersed in the resin without continuous mixing.

Resin transfer molding (RTM) is an intermediate duration molding process, which is similar to RIM but employs relatively low cost closed mold equipment, i.e. low pressure pumps and molds, and produces parts at a slower rate.

Attempts have previously been made to use unsaturated polyester resin as the main resin constituent to take advantage of its desirable qualities, e.g. lower cost, higher heat distortion temperature, high modulus of elasticity, and increased reinforcement capability. Certain systems have employed nitrogen gas evolved from azo compounds in the injected mixture. However, they have a short pot life and in

most products suffer from shrinkage, sink marks and surface crazing.

It is desirable to provide a system, utilizing unsaturated polyester resin, that overcomes the many problems heretofore encountered in closed molding of thermosetting materials.

## Summary of the Invention

According to the invention, the method of curing unsaturated polyester resin by reaction with hydroperoxide curing agent in the mold is characterized in that, throughout the mixture, a predetermined quantity of isocyanate, and at least one isocyanate-reactive accelerator that is exothermically reactive with the isocyanate are provided, the quantities of isocyanate and isocyanate-reactive accelerator being selected to cause them to react and generate heat throughout the mixture sufficient to accelerate the gellation and curing reaction between the polyester resin and the polyester curing agent.

The unsaturated polyester, diluted, e.g. with a suitable quantity of monomer cross-linking agent, which may have a tendency to cause shrinkage during cure, especially styrene, has an appropriate viscosity for impingement mixing of the resin with the curing agent. During the accelerated cure, this diluent is cross-linked with the polyester. Shrinkage effects attributable to the monomer are counteracted by excess isocyanate which reacts with a component of the mixture, preferably hydroperoxide, to generate carbon dioxide gas, commencing prior to gellation. Preferably the gas generation is sufficient to also cause the polyester to expand, for beneficial conservation of the resin. Preferably the reactants are selected to enable heat of reaction of the isocyanate with the accelerator to accelerate the gas evolution. The polyester curing

agent should be strictly limited in respect of presence of hydrogen peroxide to avoid an interfering foaming reaction, preferably the quantity of hydroperoxide in the curing agent being more than 7 times any quantity of hydrogen peroxide present, preferably in most instances the system being substantially free of hydrogen peroxide. Preferably the mixture is also restricted in respect of water and other ingredients reactive with the isocyanate to enable the preponderant gas-evolving reaction with the isocyanate to be the reaction of the isocyanate with the organic hydroperoxide, and to avoid deleterious effects of water etc. upon cure of the polyester, especially when isophthallic resin is employed. In the case of isophthallic resin, and often in the case even of orthophthallic resin, e.g. where surface finish or foam cell structure is important, any water present should be less than 1% of the weight of the resin. Preferably the mixture further includes a surfactant to enhance the formation of gas bubbles and facilitate reduction of resin weight in the formed article.

Preferably, especially for RIM applications: the accelerator comprises an amine based compound highly exothermically reactive with the isocyanate; the amine compound is preferably selected from the group consisting of triethylenediamine or dimethylethanolamine, and the hydroperoxide is selected from the group consisting of tertiary alkyl hydroperoxides and methyl ethyl ketone peroxide. More specifically it is presently preferred that the organic hydroperoxide polyester curing agent includes cumene hydroperoxide, the isocyanate-reactive accelerator includes dimethylethanolamine, and the gellation reaction is caused to occur in less than one minute after formation of the mixture.

Preferably, especially for RTM applications: the accelerator includes a metallic compound reactive

with isocyanate to generate heat; preferably the metallic compound is selected from the group including potassium octoate and dibutyl tin dilaurate; the accelerator consists essentially only of the metallic compound; and the quantities of the reactive ingredients are selected to cause the gellation reaction to occur after a period of at least two minutes after formation of the mixture.

The main emphasis of the invention is upon low cost resin systems, with minimal use of isocyanate and in which hydroxyl terminations are minimized, e.g. with the polyester having hydroxyl numbers of less than 100, preferably in many instances, 15 or lower. Thus less than 10%, preferably in many instances virtually no urethane linkages, are formed, and a beneficial amine oxide is formed. However, certain aspects of the invention can also be employed in creating hybrid resin alloys with special properties, in which case the resin mixture may include a limited quantity of hydroxyl-terminated polyester resin, and the gellation and curing reaction may include, in addition to the formation of a predominant number of polyester linkages, the formation of urethane linkages between the isocyanate and the hydroxyl terminated polyester. In such cases the hydroxyl number of the polyester resin in the mixture may be between about 100 and 200.

In preferred embodiments, especially for the molding of thick sections, the mixture further includes a thermoconductive agent adapted to conduct heat from an area of high temperature to an area of lower temperature within the mixture. Preferably, e.g. for the advantages of simplicity and low cost, the mixture is comprised of ingredients at temperature less than 150°F (65°C), and the mold is maintained at temperature less than 150°F (65°C), both temperatures in many cases being about 90°F (32°C).

Reinforcement elements may be dispersed in the fluid resin and delivered into the closed mold as part of the mixture, the invention characterized in that a thixotropic agent is included in the fluid resin to adjust the thixotropic index to a gel-like consistency to cause the reinforcement elements to remain suspended in the resin without substantial settling, the fluid resin preferably including added cross-linking monomer to maintain the viscosity at a level capable of impingement mixing with the hydroperoxide. For RIM applications the mixture can be tailored to gel within a few seconds.

In addition or alternatively, reinforcement elements may be placed in the closed mold and the mixture is thereafter introduced into the mold, the invention characterized in that the mixture can be tailored to cause delay of gellation for a selected duration to enable progressive wetting contact between the mixture and the reinforcement elements after the mixture has entered the mold.

To form expanded reinforced articles, reinforcement elements may be initially provided in the form of aggregations or bundles of fibre filaments, in the fluid resin, the invention characterized in that agitation prior to introduction into the mold is effective to cause the mixture to substantially penetrate and open up the aggregations or bundles and wet the surface of individual reinforcement elements, and expansion of the resin within the mold is effective to spread apart the individual elements into a relatively dispersed distribution through the mixture prior to cure.

The invention further relates to a pre-prepared agent for use in the gellation and cure of unsaturated polyester resin in the presence of a selected limited quantity of isocyanate. According to this aspect of the invention, the pre-prepared agent is preferably produced

by combination of a selected quantity of an isocyanate-reactive accelerator, that is exothermically reactive with the isocyanate, with an organic hydroperoxide polyester curing agent.

In preferred embodiments of this aspect of the invention, the organic hydroperoxide in the agent, in addition to being reactive with the unsaturated polyester to promote cure of the resin, is available to react with excess isocyanate in the mixture to generate carbon dioxide gas to combat shrinkage, and form an expanded article.

Importantly, the invention also provides a new general curing agent for a mass of unsaturated polyester resin, based upon an organic hydroperoxide and characterized in that the curing agent comprises a buffered equilibrium system of a relatively small quantity of un-ionized hydroperoxide and a salt soluble in the resin, formed by the reaction of hydroperoxide and a base.

This curing agent can have the advantage of preserving most of the hydroperoxide functionality in a relatively stable salt form, which can make the agent safe to handle, e.g. under high pressure for impingement mixing, and can avoid noxious odors commonly associated with the relatively more volatile hydroperoxide. By employing this curing agent in combination with a heat-producing accelerator system, the heat can speed the curing reaction of the hydroperoxide with the polyester, to cause more hydroperoxide to become available according to the Le Chatelier principle for equilibrium systems. At the same time the heat of the system can shift the equilibrium point to make still more hydroperoxide available.

This curing agent employs a weak base such as an amine compound or ammonia, in order to establish the

equilibrium condition by which the hydroperoxide can be available during reaction conditions.

It is a further advantage of this aspect of the invention that the salt-producing additive can itself be part of the accelerator system. Thus, for example, DMEA is a weak base which forms an equilibrium system with cumene hydroperoxide. DMEA in the salt form has an OH functional group still available to react with isocyanate to produce the needed heat. By providing DMEA in considerable excess, e.g. a ratio of 2 mols or greater DMEA to 1 mol cumene hydroperoxide, a desired equilibrium condition can be achieved, the excess DMEA also being available to react with the isocyanate for further generation of heat.

According to preferred embodiments of this aspect of the invention: the salt of the curing agent is a hydroperoxide salt of an amine, ammonia or other weak base soluble in the resin system; the curing agent includes in solution at least one constituent reactive with isocyanate (that is provided with the polyester) to generate heat to accelerate the polyester curing reaction of the agent, preferably this constituent being selected from the group consisting of a tertiary amine with an alcohol functional group having two or more carbon atoms (the alcohol functional group being free to react with isocyanate), primary and secondary amines having hydrogen terminations free to react with isocyanate, and alcohols.

In the presently most preferred embodiment the salt comprises a hydroperoxide salt of dimethylethanolamine, preferably the buffered solution comprising the reaction product of at least two mols of dimethyethanolamines per one mol cumene hydroperoxide.

## Preferred Embodiment

The preferred embodiment of the invention will now be described, after first briefly describing the drawings.

### Drawings

Fig. 1 is a flow diagram of the molded article forming sequence according to the preferred embodiment;

Fig. 2 is a diagrammatic view of a reaction injection molding apparatus employing the preferred component system;

Fig. 3 is a similarly diagrammatic view of a resin transfer molding apparatus employing the system;

Fig. 4 is a side view, partially in section, of a reinforced product produced according to a preferred embodiment, while Figs. 4a, 4b, 4c and 4d are representative profiles of density, resin distribution, fiber distribution and average cell diameter, - respectively, taken along the cross section of Fig. 4d;

Fig. 5 is a representation of a microphotograph of a side view in section of fibre bundles in a reinforced product produced according to a preferred embodiment while Fig. 6 is an end section view thereof.

### Forming Reaction

Referring to Fig. 1, in the preferred embodiment the set of reactants are prepared in three components. Component A, substantially the largest of the three, is primarily comprised of a base mass of unsaturated polyester resin. The remaining ingredients of the final mixture are arranged in the three components according to the results desired and also to avoid premature reaction.

Component B is comprised primarily of isocyanate, but may include other reactants, e.g.

surfactant to facilitate bubble formation where an expanded product is desired. Component C primarily contains the polyester curing agent, an organic hydroperoxide. In one preferred embodiment, the curing agent is provided in a pre-prepared compound with at least one amine compound which is exothermically reactive upon mixing with the isocyanate to accelerate other reactions between ingredients in the mixture. In other embodiments, e.g. where other accelerators are used or where the preprepared amine/curing agent compound is not used, the accelerator may be included with the polyester resin in Component A.

Where it is desired to form a reinforced article, reinforcement elements may be placed into the mold prior to introduction of the mixture, or reinforcement elements may be dispersed in the unsaturated polyester resin of Component A for introduction into the mold with the mixture. In this case, the thixotropic index of Component A is adjusted by adding thixotropic agents to produce a gel-like consistency so that reinforcement elements dispersed in the resin remain dispersed substantially without settling, thus continuous mixing of the resin component can be omitted and problems of settling in stagnated pipes and hoses can be avoided. The viscosity of such a mixture is adjusted by the addition of cross-linking monomer so that impingement mixing with the curing agent and reactants can still be accomplished.

Suitable thixotropic agents include, e.g., fumed silica (as supplied by DeGussa Corp., of Teterboro, New Jersey, or Cabot Corporation, of Tuscola, Illinios), precipitated silica (as supplied by J. M. Huber, Corp., of Havre de Grace, MD), or bentonite clay (as supplied by NL Industries, Inc. of Hightstown, NJ).

Component A, or another component, may also include a thermo conductive agent, e.g. aluminum

trihydroxide ($Al(OH)_3$ (hydrated alumina)), which in the mold will act to conduct heat in the mixture, typically from the internal portions to exterior portions or to the surface of the cooler mold. This prevents development of extreme temperatures in the mixture, which can cause cracking in large, thick, e.g. 3/8 inch (9.5 mm) or thicker sections or detrimental boil off to the surface of the monomer diluent.

Components A and B, typically containing more than one ingredient, are premixed 16, 18. All three components are combined and thoroughly mixed by simultaneous introduction through impingement mixer 20.

The isocyanate in Component B begins to react with the accelerator to generate quantities of heat 22 throughout the mixture.

Where expansion of the mixture is desired, e.g. for filling the mold, for resisting shrinkage of the material as it gels and cures, or to produce a light weight part or a part requiring less of the expensive resin, the quantity of isocyanate provided is selected so that the exothermic reaction of the isocyanate with the accelerator triggers and accelerates a carbon dioxide gas-evolving reaction 24 between the isocyanate and the organic hydroperoxide polyester curing agent. The surfactant in Component B aids in formation of gas bubble voids throughout the mixture. With suitable selection of the ingredients the reaction also results in formation of a resinous residue identified as an amine oxide polymer. The gas-evolving reaction occurs as follows:

$$R{-}N{=}C{=}O \quad + \quad H{-}O{-}O{-}R \qquad\qquad CO_2 \quad + \quad \underset{H}{\overset{R}{N}}{-}O{-}R$$

| | | | |
|---|---|---|---|
| (Isocyanate) | (Hydro-peroxide) | (Gas) | (Amine Oxide) |

The heat generated throughout the mixture by the reaction of the isocyanate-reactive accelerator and the isocyanate also triggers and accelerates the gellation and curing reaction 26 of the polyester curing agent, i.e. the organic hydroperoxide with the unsaturated polyester resin, to cure the molded article. By use of properly selected materials, as discussed more fully below, the gas evolving reaction between the isocyanate and the organic hydroperoxide is made to proceed before the heat generated in the mixture triggers the gellation reaction to solidify the mixture, and the time between each reaction may be selectively adjusted consistent, e.g., with the time of mold filling and reinforcement wetting, if desired. The gas-evolution continues as the gellation reaction is triggered so the resin cures in the expanded state, without shrinkage.

For a solid article, or for a smaller article or one with less critical dimensional requirements, the quantities of ingredients can be selected so the exothermic reaction of the isocyanate-reactive accelerator and the isocyanate triggers the gellation and curing reaction substantially without formation of gas in the mixture.

The unsaturated polyester resin which comprises most of Component A may be prepared by the condensation of an unsaturated dicarboxylic acid, such as maleic or fumaric acid; with a glycol or mixture of glycols, such as ethylene glycol; propylene glycol; 1,4-butanediol; 1,6-hexandiol; or diethylene glycol. Saturated acids, e.g. phthalic acid, sebacic acid, or adipic acid, are sometimes included in the composition to reduce the amount of unsaturation along this line in the final product, making it more flexible and tougher. The constituents are generally chosen according to the invention, to ensure that the linkages formed during

cure are predominantly polyester and monomer cross-linking linkages, preferably there being no more than about 10% of other linkages such as urethane or urea linkages formed. Preferably an unsaturated polyester resin is used which is restricted with respect to the number of hydroxyl groups or carboxyl groups; that is, the resin has a hydroxyl number of less than 100, preferably less than 15, and where it is desired to form amine oxide preferably less than 10 and most preferably substantially zero; the resin also preferably has an acid (carboxyl) number of less than 15, preferably less than 10, and most preferably substantially zero.

There is customarily added to the unsaturated polyester resin a vinylic monomer. This vinylic monomer serves as a solvent or diluent for the unsaturated polyester and as a co-monomer therefor. Such vinylic monomers are usually referred to as cross-linking agents for the unsaturated polyester resin. Examples of such cross-linking monomers are styrene and divinyl benzene.

Component B for the expansion of an unsaturated polyester resin is preferably comprised of a mixture (16, Fig. 1) of the reactive organic isocyanate and a surfactant. The surfactant, which is used to control the size and size distribution of cell-forming bubbles, can be any suitable agent (preferably non-ionic) that adjusts the surface tension to promote the desired cell formation when organic hydroperoxide is reacted with the isocyanate. To make a commercially available premixed expander, a low hydroxyl surfactant, non-reactive with isocyanate is prepared, with ratio of isocyanate to surfactant between about 95 to 5 down to 85 to 15, respectively, by weight. Preferably a silicone surfactant such as a polyoxyalkylene polysiloxane polymer is employed. (Such premixed expander has a long shelf life.)

Examples of suitable isocyanates are aromatic isocyanates, (and isocyanates having a reactivity comparable to aromatic isocyanates, e.g. aliphatic isocyanates, such as ethylene bis(4-cyclohexol) isocyanate from Mobay Chemical Corporation of Pittsburg, PA), including monoisocyanates, e.g. n-butyl isocyanate, phenyl isocyanate; diisocyanates, e.g. tolylene diisocyanates, diphenyl methane diisocyanates (methyl diphenyl isocyanate or "MDI"), napthanene diisocyanates, phenylene diisocyanates; triisocyanates, e.g. triphenylmethane triisocyanates; and polymeric polyisocyanates.

Suitable organic hydroperoxides include tertiary alkyl hydroperoxides, such as cumene hydroperoxide and t-butyl hydroperoxide, and butanone hydroperoxide (methyl ethyl ketone peroxide or "MEKP").

The isocyanate or the organic hydroperoxide may be present as a monomer or as various polymeric homologues.

In the preferred embodiment, the organic hydroperoxide is cumene hydroperoxide (or less preferably t-butyl hydroperoxide, which in most cases is more difficult to handle due to its low flashpoint and noxious fumes) present at about 1/2 to 2 percent of the resin weight. For expanded articles, the organic hydroperoxide reacts with the organic isocyanate to generate carbon dioxide, then, at elevated temperatures, reacts to gel and cure the polyester resin. For solid articles, the gas evolving reaction does not occur and the gellation and curing reaction proceeds directly.

In the preferred embodiment, the organic hydroperoxide is introduced as a separate component, C, but these particular organic hydroperoxides are substantially unreactive with the resin at room temperature, typically having a shelf life of twenty hours, which may be extended with inhibitors, e.g.

hydroquinone. Therefore, at times, they may also be introduced into the system in the A Component with the resin and the accelerator. The accelerator is typically an amine compound, reactive with isocyanate, e.g. DMEA (dimethylethanolamine), TEDA (triethylenediamine), aniline, diphenyl-amine, hexafluorisopropyl amine, other primary or secondary amine compounds, tertiary amine compounds having -OH functional groups, alcohol, or metallic compounds exothermically reactive with isocyanate, e.g. potassium octoate or tin dibutyl dilaurate, the particular compound being chosen, e.g. in accordance with the speed of reaction desired.

The metallic compounds are typically only used for formation for expanded articles. Combinations of different amines or of amines and metallic compounds may also be used.

Where an amine compound is used, it is preferred that the isocyanate-reactive accelerator and the polyester organic hydroperoxide curing agent be provided as a pre-prepared agent, e.g. DMEA and cumene hydroperoxide in a 2 to 1 ratio, by weight.

As indicated by IR spectra, the mixture of amine and hydroperoxide reacts to form a buffered solution, which includes an amine salt of the hydroperoxide that is relatively stable over time, with a small amount of the less stable organic hydroperoxide remaining in the solution in un-ionized state. In this case, DMEA acts as a weak base to react with the slightly acidic hydroperoxide. Upon mixing of this pre-prepared agent with the isocyanate and the unsaturated polyester resin, the isocyanate reacts with the alcohol termination of the preferred tertiary amine, DMEA, to generate heat to trigger reaction of the un-ionized hydroperoxide, i.e. with the isocyanate (to form gas) and with the unsaturated polyester resin (for gellation and cure). If primary or secondary amines are

used, the heat generating reaction occurs between the isocyanate and the hydrogen termination. Also non-alcohol terminated tertiary amines could be used in a mixture with an isocyanate-reactive component, e.g. an alcohol or a primary or secondary amine. As the hydroperoxide is depleted by reaction, the buffering characteristic of the pre-prepared system causes the salt to partially decompose thus freeing more of the hydroperoxide for reaction.

The accelerator may also be introduced with the A component at up to about 6 to 10 percent of the resin weight, inversely proportional to the reactivity of the resin, i.e. inversely proportional to the percentage of maleic or fumaric acid. In the case of DMEA, a ratio of DMEA to isocyanate of about 1:6 to 1:1, is employed, a ratio many times that which is typically employed in a urethane RIM reaction. The metallic compounds are similarly used in amounts many times in excess of that typically employed.

The isocyanate-reactive accelerator reacts with the isocyanate to generate heat. For an expanded article, an excess quantity of isocyanate, beyond that amount reactive with the accelerator to generate heat, is provided in the mixture. The heat of the accelerator and isocyanate reaction triggers and accelerates the reaction of the excess isocyanate with the organic hydroperoxide in the pre-prepared agent to evolve carbon dioxide gas throughout the mixture to expand the resin mass to fill the mold cavity under pressure, typically 45 psi, while continued heat generation (from the gas evolving reaction and from the accelerator/isocyanate reaction) triggers and accelerates reaction between the polyester organic hydroperoxide curing agent and the unsaturated polyester resin to cure the polyester in the fully expanded state. The process from injection to a gelled state suitable to allow demolding the article occurs over between about four seconds and three

minutes, depending upon the conditions and ingredient quantities selected.

When a non-expanded article is desired, a relatively reduced quantity of isocyanate is provided and the heat generated by the reaction of the accelerator and the isocyanate triggers and accelerates only the gellation and curing reaction of the organic hydroperoxide curing agent and the unsaturated polyester resin, with substantially no gas-evolving reaction between the isocyanate and the organic hydroperoxide. (Also, surfactant is not used in the mixture so any gas evolved during reaction may be vented from the mold without formation of voids in the mixture.)

Process

Referring now to Fig. 2, Components A, B, and C are prepared separately in containers 28, 30, 32. Component A, consisting primarily of the base mass of polyester resin, is of substantially larger volume. In RRIM (Reinforced Reaction INjection Molding) processes, Component A (28) also contains reinforcing fibres which are dispersed into the mixture. The weight ratio of Component A to Component B to Component C is preset at controller 36 which also controls the total amount of mixture to be introduced into the mold for each piece, i.e. "shot size".

Component B, without reinforcing fibres, is fed into the cylinder of a piston pump 40 or a progressing cavity screw operated via servo valve 42 controlled by controller 36. (A positive displacement pump, e.g. a gear pump, could also be employed, however a recirculation line (shown in dashed lines 38) would be required to maintain line pressure.)

The temperature of the final mix is controlled, typically at about ambient temperature, i.e. below about 150°F (65°C), by exposing Component A to a temperature

regulator 44, which may take the form of a tank jacket, a heat exchanger, or simply heated piping. Component A is fed into the cylinder of piston pump 46 controlled by separate servo valve 48, also controlled by controller 36.

Component C is similarly fed into a piston pump 52 operated via a third servo valve 54, also controlled by controller 36.

Where the individual components contain nonhomogeneous mixture of ingredients, static or mechanical mixers may be employed in the feed lines.

Components A, B, and C are combined by impingement mixing in mixhead 56 and this final mixture is injected into mold cavity 58. The reaction between the components starts almost immediately, e.g. within 2 to 30 seconds, depending upon selected parameters, so mixing and injection occur in quick succession.

The gas evolution reaction expands the mass of resin, carrying the reinforcing fibres therein, to fill the mold cavity under pressure. The resin subsequently, typically between eight seconds and three minutes, gels in the expanded state. The mold 58 is then opened, the completed article is removed, the mold 58 is closed and clamped, and the process is repeated.

Where a longer period of time is desired between mixing and gellation of the mixture, e.g. with large articles requiring more time to deliver material into the mold, where in-the-mold reinforcement elements are used and a longer delay period is desired to allow additional wetting contact between the mixture and the reinforcement elements, or in typical RTM (resin transfer molding) processes, as shown in Fig. 3, the parameters of operation may be varied to provide times between mixing and gellation of two minutes or more.

Referring to Fig. 3, there is shown a diagrammatic representation of a typical resin transfer

molding process apparatus 60, e.g. of the type supplied by Liquid Control Corp., of North Canton, Ohio, comprised of material feed and mixing system 62 (including controller 64) and mold 66. The material feed system includes separate supply tanks 68, 70, 72 for each ingredient, and separate metering pumps 74, 76, 78, and a typically 100-400 psi head, versus 2000 psi head required for RIM processing equipment. The size of the mixture shot and the relative proportions of each material per shot are predetermined by means of controller 64. The feeds from the metering pumps are combined in mixer 80 and fed into mold 66. The mold is comprised of male and female sections 84, 86 which fit together to form mold cavity 88 to receive the combined ingredients. A reinforcing element 90, e.g. continuous strand mat, woven roving, preformed mat, chopped strand mat, or cloth, may be placed into mold cavity 88 before the male 84 and female 86 sections are joined and clamped. The product surfaces 94, 96 of either or both mold sections 84, 86 may also be prepared with a gel coat, if this is the desired product finish, by spraying the mold surface with resin and then curing. Pinch off areas 96, 98 are provided at mold high points to allow venting 100, 102 of air from the mold during the process to ensure mold filling.

Components A, B and C are connected to individual metering pumps 74, 76, 78 respectively. The reinforcing element 90 is placed into the mold cavity 88, and the male mold segment 84, which has been gel coated and the female segment 86 are joined and clamped. The controller 64 is preset for the proper proportions and shot size (the shot is typically sized to fill the mold cavity to approximately 50 percent capacity or to full capacity where high density, high tolerance parts are to be produced without shrinkage, e.g. microwave antennas or chemical resistant floor

grating), and metering pumps 74, 76, 78 are activated to simultaneously meter the components through the mixer 80 and into the mold cavity 88 via sprue 82, typically at a rate of 5-30 lb./min., versus 20-300 lbs. or more per min. for RIM. Advantageously, the system provides for a delay before gas evolution, typically one minute, or substantially more for complex or thick parts, which allows time for pumping the mixture into the mold as well as time for wetting the reinforcement during this liquid phase.

Valve 104 in sprue 82 then closes, and the mixer 80 is cycled through a solvent flush cycle to remove any remaining reactants from the mixer.

In the mold cavity 88, the accelerator reacts with the isocyanate in the mixture to generate heat throughout the mixture. The rising temperature subsequently triggers the gas-evolving reaction between the isocyanate and the organic hydroperoxide, typically at 95°F, as measured in a 50 gram cup, which causes the base resin mass to expand quickly within cavity 88. This expansion forces substantially all of the air out of the mold cavity. When resin starts to leak from vents 100, 102 they are closed. The expansion then generates pressure, typically of the order of up to 50 psi, within the mold which brings the fluid foam into pressurized contact with substantially all the surface of reinforcing element 90. This generated pressure in the fluid state causes self-working within the closed cavity to force air out of the reinforcing element and bring about some wetting contact. When the resin subsequently gels in the expanded state, this wetting contact with the reinforcing element imparts some additional strength properties in the finished article.

The mold is then unclamped, and the article is removed.

Expanded Product Structure

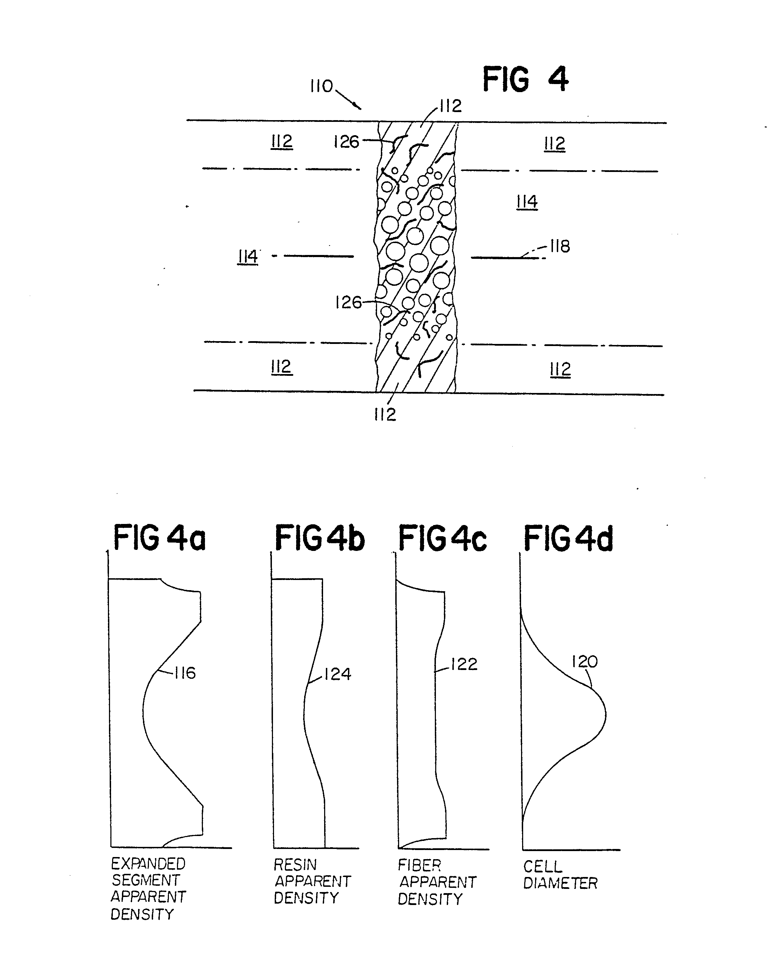

In Fig. 4, a reinforced expanded product 110 produced according to the invention is shown in cross section. The cured, expanded polyester, typically .250 inch (6.35 mm) thick, of the product 110 is comprised of skin 112, typically .040 inch (1.02 mm) thick, formed at both surfaces against the mold where little or no gas formation occurs, and the expanded center segment 114, typically .170 inch (4.32 mm) thick. The expanded segment 114 has differential density (116, Fig. 4a), with the lowest density along the neutral axis 118 through the center of product 110. This profile of density is caused by differential temperature within the material during the expansion process, the higher temperatures along neutral axis 118 causing the gas generation to initiate along the axis and proceed to greater extent to create larger gas bubbles indicated by curve 120 in Fig. 4d. The profile of fibre reinforcement distribution (122, Fig. 4c) is also lower along neutral axis 118 because the gas bubbles force some of the fibre-carrying resin away from the axis, but the variation across the section is less pronounced than the variation of the resin distribution (124, Fig. 4b).

Reinforcing fibres 126, shown only representatively in Fig. 4, are shown in microphotograph representations in Figs. 5 and 6. The reinforcing fibres, typically 1/4 inch (6.35 mm) chopped strands of fibreglass .002 inch (0.05 mm) thick, are gathered into a bundle of sixty filaments bound by a phenolic resin binder. These strands are introduced into Composition A and mixed.

This mixing removes air and allows the resin to penetrate into the bundle between the fibres 126. When the gas generating reaction and gellation occurs, the fibres of the bundle are forced apart by the formed gas bubbles 128 but remain in complete contact with the

surrounding cured resin 130. Further, the fibres of adjacent bundles intermix to give still further strength properties.

In prior known expanded polyester systems, the gas-generation occurs almost immediately. In the present invention, where desired, by selection of the ingredients, a degree of delay can be achieved, e.g. to allow the mixture to force out air 132 trapped in the mold and wet any reinforcing fibres 126 that may have been provided in the mold.

Example of the Gas Generating Reaction

In order to provide an example of the gas generating capability of two of the components, i.e. an isocyanate and an organic hydroperoxide, a series of reactions was observed using different weight ratios of the components. The specific isocyanate reactant used was a commercial MDI agent comprising MDI monomer and higher polymeric homologues (Mondur MR, from Mobay Chemical Co., Pittsburgh, Pennsylvania). The hydroperoxide reactant used was a commercial MEKP agent comprising a 60 percent solution of MEKP and higher polymeric homologues in an inert solvent, dimethyl phthalate (DDM from the Lucidol division of Pennwalt Corp., King of Prussia, Pennsylvania).

For each experiment, the two reactants were weighed into a 50 gram cup and mixed together at room temperature (about 68° F or 20°C) and ambient pressure for about 30 seconds. The resulting reaction was significantly exothermic. The evolved gas was then measured, as summarized in the following table:

TABLE 1

| Ratio by Weight of MDI Agent to MEKP Agent | ml of Gas per Gram of Mixture |
|---|---|
| 0.10 | 4.9 ml/g |
| 0.19 | 115.0 ml/g |
| 0.48 | 111.0 ml/g |
| 0.91 | 58.3 ml/g |
| 1.67 | 55.4 ml/g |
| 3.13 | 48.4 ml/g |
| 6.69 | 14.1 ml/g |
| 9.65 | 3.3 ml/g |

The results show that the gas evolved per gram of mixture peaks at about 140 ml/g mixture at an MDI to MEKP agent ratio between about 0.24 and 0.30. (When the weights used are corrected to remove the solvent weight, the maximum amount of gas evolved by the reactants increases to about 180 ml/g corrected mixture, which is within the range theoretically predicted by the formula given above.)

The gas generated can be controlled to produce a wide range of densities of polyester products, i.e. the reaction can be used to produce a resinous product of microcellular composition that does not shrink during curing; it may be used in high density RIM applications where limited expansion is required to fill the mold, i.e. where the expansion reaction is employed primarily for mold filling; because the resultant cell structure can be strong (and strengthened by the amine oxide reaction product) the reaction can be employed to extend resins in high density applications, e.g., 30 $lbs/ft^3$ to 60 $lbs/ft^3$ (about 485 $kg/m^3$ to 970 $kg/m^3$), and thus can supplant use of special extenders such as preformed glass spheres added to resin; or it can be used for lower density products, for instance densities of 15 $lbs./ft^3$ and lower.

Example A

Component A was comprised of 100 grams of a highly reactive base polyester resin (94-224, supplied by Reichhold Chemicals, Inc. of White Plains, New York, believed to be made with about a 2 to 1 ratio of maleic acid to isophthallic resin). 20 grams of 1/4 inch (6.35 mm) chopped reinforcement fibres were also added to the mixture. A mixer was activated to mix the ingredients and to disperse and wet out the reinforcing fibres.

Component B was comprised of a mixture of 95 percent of a commercial MDI (methyl diphenyl isocyanate) product (Mondur MR supplied by Mobay Chemical) and 5 percent surfactant (L-5340, a silicone surfactant from Union Carbide Corp.).

Component C was comprised of a pre-prepared agent made by mixing cumene hydroperoxide supplied by Lucidol Division of Penwalt Corp. of Buffalo, New York, and DMEA, dimethylethanolamine, supplied by Penwalt Corp. of Philadelphia, Pennsylvania, in a 1 to 2 ratio, respectively, by weight. The agent was refrigerated until time of use.

Components A, B, and C were combined at about ambient temperature in an impingement mixer in a ratio of approximately 90:10:6 and injected into a closed mold cavity at about ambient temperature. Reaction between the DMEA and the isocyanate was noted almost immediately by a rise in the exothermic temperature of the mixture. This was followed (after about five seconds and at an exothermic temperature of around 95°F (35°C)) by evolution of carbon dioxide gas which expanded the base mass of polyester resin to fill the mold. A continuous temperature rise was noted and pressure in the mold increased to typically around 45 psi (about 15 $kg/cm^2$). The expanded mass gelled at around 140°F (60°C) after about 20 seconds and the finished product was subsequently removed from the mold.

The finished product had class A surfaces at both faces, i.e. suitable for finish coating without grinding or filling, e.g. for automobile trunks, hoods, fenders, bumpers, drip pans, computer housings and panels, etc., due to a substantially nonporous skin formed at each surface.

Example B

In this example, Component A was prepared by adding 20 grams of styrene and 0.2 grams of 6 percent cobalt naphtanate (from Mooney Chemicals, Inc.) to 80 grams of polyester resin (31-001, supplied by Reichhold, a standard commercial resin typically containing about 35% styrene) in a clear, cylindrical tank. Two grams of a suspension agent, fumed silica (Cabosil, supplied by Cabot) was added to the resin mixture as a suspension agent. The agent had the effect of changing the mixture to a gel-like consistency while having only minor effect on the viscosity. The viscosity change caused by the agent was allowed for in the final mixture by addition of an excess quantity of the lower viscosity styrene. Twenty grams of 1/4-inch (6.35 mm) chopped reinforcement fibres were added, and the mixture was stirred until the fibres were dispersed through the resin. The mixture was allowed to stand without agitation for three days. It was observed that the fibres remained dispersed in the resin substantially without settling.

The procedure of Example A was then repeated using this mixture as Component A. The finished product had Class A finishes at both surfaces and the reinforcement material was evenly dispersed throughout the material.

Example C

The procedure of Example A was repeated, but the base resin was replaced with a polyester resin made with a 2:1 ratio of maleic acid to isophthallic acid

(31C, supplied by Freeman Chemical Corp. of Port Washington, Wisconsin), and Component C was reduced to 4 parts.

After mixing and injection into the mold according to the procedure of Example A, the mass gelled at 140°F (60°C) after only 12 seconds, and the finished product was removed from the mold after 30 seconds.

Example D

In this example, Component A was 400 grams of an isophthallic flexible resin (31-830 from Reichhold) to which was added 2 grams of 6% cobalt napthanate (from Mooney Chemicals, Inc. of Cleveland, Ohio), 2 grams of water, 60 grams of styrene monomer (from Ashland Chemical Co. of Columbus Ohio), 4 grams black polyester pigment (from Pigment Dispersions, Inc. of Edison, New Jersey), 23 grams of 1/4-inch (6.35 mm) chopped strand fibreglass (832FC from Owens-Corning Fiberglas Corp. of Toledo, Ohio), and 460 grams of aluminum trihydroxide (LV336, from Solem Industries, Inc. of Atlanta, Georgia).

Components B and C were the same components used in Example A (above), 46 grams and 24 grams, respectively.

Components A, B and C, at ambient temperature, were combined in their entireties through an impingement mixer and injected into a closed mold.

The small amount of water and the aluminum trihydroxide had the effect of slowing the gellation reaction, which was necessary due to the extended time required for injection of the mixture into the mold, i.e. about 30 seconds.

When the reaction between the DMEA and the isocyanate began, noted by a sharp rise in the exothermic temperature of the mixture, the aluminum hydroxide acted as a heat sink for the relatively thick article, i.e. over 3/8 inch (9.5 mm) thick, to conduct

heat from the center of the material where highest temperature tends to occur. This can prevent cracking of the material and can inhibit migration of gaseous styrene monomer from the center to the surface as the article cures, thus to prevent surface blemishes.

The process continued as in Example A, with the article gelling after about 45 seconds. The aluminum trihydroxide acts in the finished article as a fire retardant and smoke suppressant.

Example E

Example A was repeated, but in this example, an additional 1/2 gram of water was added to Component A in order to generate additional foaming pressure to fill the mold in a resin transfer molding process.

The procedure of Example A was repeated with similar results, however pressure in the mold increased to above 45 psi (about 15 $kg/cm^2$) to force the mixture to fill the mold.

The use of this quantity of water with this isophthallic polyester resins is still within the limit, of less than 1.0 percent of the resin, by weight, needed to achieve cure and good resin properties. It is important that, by observing this limit or preferably limiting the water to about 0.5% or less, the invention enables use of such isophthallic resins for their excellent chemical and corrosion resistance performance, and their medical safety.

Example F

Component A was prepared by adding two grams of a tertiary amine accelerator (DABCO-8020, a rigid urethane foam catalyst comprised of 20% triethylene diamine and 80% DMEA, supplied by Air Products and Chemicals, Inc. of Allentown, Penn.), which is highly

reactive with isocyanate, to 100 grams of base polyester resin (31-001 supplied by Reichhold). An additional 20 grams of 1/4 inch (6.35 mm) chopped reinforcement fibres were also added to the mixture. A mixer was activated to mix the ingredients and to disperse and wet out the reinforcing fibres.

Component B was comprised of a mixture of 95 percent of the commercial MDI product described above (Mondur MR supplied by Mobay) and 5 percent surfactant (L-5340, a silicone surfactant from Union Carbide Corp.).

Component C was comprised of t-butyl hydroperoxide (TBH-90, which is low in percentage of water and hydrogen peroxide impurities, from Lucidol).

Components A, B, and C were combined in a mixer head in a ratio of 90:10:1 and injected into a closed mold cavity. Reaction between the amine catalyst and the isocyanate was noted almost immediately by a rise in the exothermic temperature of the mixture. This was followed (after about five seconds, and at an exothermic temperature of about 95°F (35°C)) by evolution of somewhat more substantial amounts of carbon dioxide gas than seen in Examples A, B and C. The gas expanded the base mass of polyester resin to fill the mold and continued to increase mold pressure to approximately 45 psi (about 15 $kg/cm^2$). In this example, the expanded mass again gelled at 140°F (60°C) after about 45 seconds and the finished product was removed from the mold after about 2 minutes.

The finished product again had class A surfaces at both faces.

Example G

The procedure of Examples F above was repeated, but the TBH-90 low water, low hydrogen peroxide t-butyl hydroperoxide was replaced with TBH-70X (Lucidol) which had higher levels of impurities, e.g. about 20% water.

The process was observed to proceed substantially as in Example F, however the surface of the finished product was rough and somewhat porous and the article did not cure completely.

Example H

Component A was Freeman's XP40-A173 polyester resin to which 0.75 percent, by weight of the resin, of a 15 percent potassium octoate accelerator and 0.3 percent, by weight of the resin, of a 6 percent cobalt napthanate promoter were added. Component B was present as a mixture of 95 percent of the commercial MDI product mentioned above (Mobay's Mondur MR) and 5 percent surfactant (L-5340, a silicone surfactant from Union Carbide). Component C was MEKP (Ludicol DDM/9) provided in a 50 percent solution with about 0.7% water and 0.7% hydrogen peroxide, by weight. The three components were prepared and separately provided to a resin transfer molding apparatus. The mold, containing a mat of continuous fibres and a cured gel coat on the male mold surface, was closed and clamped. The controller was set to inject the components into the mixing head in a weight ratio of 100:15:4 (Component A:Component B:Component C) in a ten pound shot. (The portion of isocyanate is relatively large as compared to that used in RIM systems in order to develop the additional pressure necessary to completely fill the mold when using the slower potassium octoate isocyanate reactive accelerator.) The system was activated and the components were pumped through the mixing head and into the mold cavity to occupy approximately two thirds of the available volume. (Pumping the entire shot into the mold cavity took approximately one minute.) The temperature of the resin mass in the mold increased without noticeable gas evolution for approximately three minutes after initial mixing until the exothermic temperature reached 95°F. At that point, initiation of

the gas evolving reaction was noted and the resin mass began expanding to fill the mold, forcing the remaining air from the mold cavity. Pressure in the mold increased to approximately 45 psi until the mixture gelled at 140°F, approximately six minutes after initial mixing. The part, which had a density of about 60 $lbs/ft^3$, was demolded 18 minutes after mixing and examined. The expanded segment below the gel coat had nonporous layers, i.e. "skins", at both surfaces with no voids or gas bubbles.

Example I

In this example, the procedure of Example H was repeated, but the metallic accelerator (potassium octoate) was replaced with two grams of tin dibutyl dilaurate (T-12, from M&T Chemicals, Inc. of New Jersey), another metallic compound exothermically reactive to isocyanate.

A temperature rise was noted almost immediately upon mixing and the mixture expanded and gelled in the expanded state after about 4 minutes.

## Other Embodiments

Other embodiments are within the following claims. For example, articles formed according to invention may be prepared without reinforcement, e.g. for small articles such as small doors, drawer fronts, machine covers, etc., or may be reinforced by placing reinforcing materials within the mold prior to injection. (In the latter case, where a quick gas evolving reaction is employed, the reinforcement would not be substantially wet out and would merely be encapsulated within the expanded material, however excess quantities of reinforcement can be employed to enhance strength, made possible by the fact that the A Component, by far the largest quantity, is available to

carry fibres, hence more fibres can be used than in prior RIM systems, e.g. urethane RIM.)

The surfactant could also be included with the base mass of resin in Component A as well as or instead of with the isocyanate (Component B). In products where shrinkage is not an important consideration, e.g. in smaller parts or those with less critical dimensional tolerances, the surfactant may be excluded and the composition formulated to gel without evolution of a significant quantity of shrinkage-resisting carbon dioxide gas.

The reaction system of this invention may also be used to form synthetic articles on other forming or supporting surfaces.

These and other examples of forming processes employing the reaction system according to the invention are as follows:

<u>Example J</u>

The procedure of Example F was repeated, but the surfactant contained in Component B of that example was excluded, and the amount of isocyanate was reduced to five grams.

Components A, B and C were combined as above, but the shot size was increased so the unreacted composition filled the mold. No expansion of the composition was noted. After about 1 minute, the article was removed from the mold, and cut open. Substantially no voids had been formed.

<u>Example K</u>

The procedure of Example A (above) was repeated, but the base resin mass was a flexiblized polyester resin (Reichhold 31-830). No reinforcing fibers were added to the mixture.

The reaction proceeded as in Example A to form a nonreinforced finished product.

Example L

The procedure of Example F above was repeated, however the reinforcing fibres were not added to Component A. Instead a similar amount of fibre roving was placed in the mold before closing. The process proceeded as above. Examination of the finished product revealed that the reinforcement was not intimately bound in the expanded resin but was encapsulated in it, with some added strength being obtained because of the presence of the reinforcement.

Hybrid Polymers

It is also understood that hybrid polymeric products may also be formed employing certain aspects of the invention, e.g. products having a significant quantity of urethane linkages in addition to predominant polyester linkages.

Example M

In this example, Component A comprised 100 grams of a hydroxyl terminated polyester resin having a hydroxyl number of 113 (S6-247 (TG-87), from Amoco Chemicals Corp. of Chicago, Illinois).

Component B was 10 grams of a 95:5 mixture of the MDI product and surfactant, as used in Example A.

Component C was a stable pre-prepared buffered accelerator system formed by combining 6 grams of DMEA and 3 grams of cumene hydroperoxide.

The three components were combined in an impingement mixer and injected into a closed mold. Temperature rise was noted almost immediately upon mixing and the mixture expanded and gelled in the

expanded state after about 18 seconds and subsequently cured.

What is claimed is:

1. A method of forming molded articles of unsaturated polyester resin comprising

causing gellation and curing of polyester resin by reaction at the mold surface of a mixture comprising a fluid mass of unsaturated polyester resin and a hydroperoxide polyester curing agent,

c h a r a c t e r i z e d in that

for the purpose of improving the molding cycle or enabling the improvement of a physical property of the article,

the method comprises employing, throughout said mixture,

a predetermined quantity of isocyanate,

and at least one isocyanate-reactive accelerator that is exothermically reactive with said isocyanate,

the quantities of said isocyanate and said isocyanate-reactive accelerator being selected to cause them to react and generate heat throughout said mixture sufficient to accelerate the gellation and curing reaction between said polyester resin and said polyester curing agent.

2. The method of claim 1

c h a r a c t e r i z e d in that

said polyester resin is diluted with a monomer cross-linking agent and said diluted polyester is mixed with its curing agent by impingement mixing.

3. The method of claim 1 or 2 further c h a r a c t e r i z e d in that

an excess quantity of isocyanate is provided in addition to the quantity which is reactive exothermically with said selected quantity of isocyanate-reactive accelerator,

said excess quantity of isocyanate being reactive prior to gellation of said polyester resin with at least one component of said mixture to generate carbon dioxide gas to cause formation of small gas bubbles throughout said mixture.

4. The method of claim 3 in which said polyester resin is diluted with a monomeric cross-linking agent,

c h a r a c t e r i z e d in that

cross linking of said monomer during gellation and cure of the mixture has the tendency to cause shrinkage of said mixture, said generaion of carbon dioxide in accordance with claim 3 being sufficient at least to prevent said shrinkage.

5. The method of claim 3 or 4

c h a r a c t e r i z e d in that

the reactants are selected to enable the heat produced by said exothermic reaction of said isocyanate with said isocyanate-reactive accelerator to accelerate said gas evolving-reaction of said excess quantity of isocyanate.

6. The method of claim 3, 4 or 5 c h a r a c t e r i z e d in that an excess quantity of said organic hydroperoxide polyester curing agent is provided in addition to the quantity which is reactive to cure said polyester resin,

said excess quantity of said organic hydroperoxide being reactive with said excess quantity of isocyanate in said gas-evolving reaction.

7. The method of claim 3, 4, 5 or 6 c h a r a c t e r i z e d in that said organic hydroperoxide polyester curing agent is substantially free of hydrogen peroxide to avoid an interfering foaming reaction.

8. The method of claim 5 or 6 c h a r a c t e r i z e d in that said mixture is substantially free of water and other ingredients reactive with said isocyanate.

9. The method of claim 3, 4, 5, 6, 7 or 8 c h a r a c t e r i z e d in that said mixture further includes a surfactant provided to enhance the formation of gas bubbles and thereby facilitate the reduction of resin weight per volume in the formed article.

0072024

10. The method of any of the preceding claims 1 through 9

c h a r a c t e r i z e d in that

said accelerator comprises at least an amine based compound highly exothermically reactive with said isocyanate, and

the quantities of the reactive ingredients in said mixture are selected to cause said gellation reaction to occur in the time range of a few seconds up to three minutes after formation of said mixture, depending upon the selected formulation.

11. The method of claim 10

c h a r a c t e r i z e d in that

said hydroperoxide and said amine based compound are provided in the form of a pre-prepared reaction product of an amine compound and a hydroperoxide.

12. The method of claim 10 or 11

c h a r a c t e r i z e d in that

said amine compound is selected from the group consisting of triethylenediamine or dimethylethanolamine.

13. The method of claim 10, 11 or 12

c h a r a c t e r i z e d in that

said hydroperoxide is selected from the group consisting of tertiary alkyl hydroperoxides and methyl ethyl ketone peroxide.

14. The method of any of the preceding claims 1-13

c h a r a c t e r i z e d in that

said hydroperoxide curing agent comprises a buffered, equilibrium system of a relatively small quantity of un-ionized hydroperoxide and a salt soluble in said resin formed by the reaction of hydroperoxide and a base.

15. The method of any of the preceding claims 1-14

c h a r a c t e r i z e d in that

said organic hydroperoxide polyester curing agent includes cumene hydroperoxide,

said isocyanate-reactive accelerator includes dimethyl ethanol amine, and

said gellation reaction is caused to occur in less than one minute after formation of said mixture.

16. The method of any of the preceding claims 1-9

c h a r a c t e r i z e d in that

said accelerator includes a metallic compound reactive with said isocyanate to generate said heat.

17. The method of claim 16

c h a r a c t e r i z e d in that

said metallic compound is selected from the group consisting of potassium octoate and dibutyl tin dilaurate.

18. The method of claim 16 or 17 c h a r a c t e r i z e d in that said accelerator consists essentially only of said metallic compound, the quantities of the reactive ingredients being selected to cause said gellation reaction to occur after a period of at least two minutes after formation of said mixture.

19. The method of any of the foregoing claims 1-18 c h a r a c t e r i z e d in that said mixture further includes a thermoconductive agent adapted to conduct heat from an area of high temperature to an area of lower temperature within said mixture.

20. The method of any of the preceding claims 1-19 wherein reinforcement elements are placed upon a mold and said mixture is thereafter introduced upon said mold, c h a r a c t e r i z e d in that said mixture is caused to delay said gellation reaction to enable progressive wetting contact between said mixture and said reinforcement elements after said mixture has entered said mold.

21. The method of any of the foregoing claims 1-20 wherein reinforcement elements are dispersed in the fluid resin and delivered to the mold as part of said mixture,

c h a r a c t e r i z e d in that

a thixotropic agent is included in said fluid resin to adjust the thixotropic index to a gel-like consistency to cause said reinforcement elements to remain suspended in said resin without substantial settling,

whereby a reinforced article with well dispersed reinforcement elements can be formed.

22. The method of claim 21

c h a r a c t e r i z e d in that

said dispersion of fluid resin and reinforcement elements includes a substantial quantity of styrene monomer to provide a viscosity capable of impingement mixing with said hydroperoxide,

and causing said impingement mixing prior to introduction into said mold.

23. The method of claim 20, 21 or 22 performed in accordance with claim 3 or 4 wherein said reinforcement elements are initially provided in the form of aggregations,

c h a r a c t e r i z e d in that

agitation prior to introduction into said mold is effective to cause said mixture to substantially penetrate and open up said aggregations and wet the surface of individual reinforcement elements within said aggregations, and

expansion of said resin within the mold is effective to spread apart said individual elements into a relatively more dispersed distribution through said mixture prior to cure.

24. The method of claim 23 wherein said reinforcement aggregations comprise bundles of fibre filaments,

characterized in that

agitation of said mixture is effective to cause said resin to penetrate the exterior of said bundle and wet the surfaces of said individual filaments, and

said expansion is effective to spread apart the filaments in each bundle and move individual filaments of adjacent bundles closer to one another to provide a more homogeneous distribution of reinforcing filaments of adjacent bundles in the cured article, with resultant increased strength of said cured article.

25. The method of any of the preceding claims 1-24

characterized in that

said mixture includes polyester resin having a hydroxyl number of 100, preferably 15 or less,

the large majority of linkages formed during the gellation and curing reaction being polyester linkages.

26. The method of any of the preceding claims 1-24

characterized in that

said mixture includes hydroxyl terminated polyester resin,

the gellation and curing reaction includes, in addition to the formation of polyester linkages, the formation of urethane linkages between the isocyanate and the hydroxyl terminated polyester throughout the body of said article,

the quantity of said hydroxyl terminated polyester resin being limited to cause the predominant number of linkages in the cured article to be polyester linkages.

27. The method of claim 26 c h a r a c t e r i z e d in that the hydroxyl number of said polyester resin in said mixture is between about 100 and 200.

28. A method of forming molded articles of unsaturated polyester resin by use of a closed mold comprising

causing gellation and curing of polyester resin by reaction in the mold of a mixture comprising a fluid mass of unsaturated polyester resin, a styrene monomer cross-linking agent, and a hydroperoxide polyester curing agent,

c h a r a c t e r i z e d in that

for the purpose of improving the molding cycle

or enabling the improvement of a physical property of the article,

the method comprises employing, throughout said mixture,

a predetermined quantity of isocyanate,

and at least one isocyanate-reactive accelerator that is exothermically reactive with said isocyanate,

the quantity of said isocyanate being selected

to cause reaction with the selected quantity of isocyanate-reactive accelerator to generate heat throughout said mixture, and also

to react prior to gellation of said polyester resin with at least one component of said mixture to generate carbon dioxide gas to cause formation of small gas bubbles through said mixture,

the heat generated by the reaction between the isocyanate and the accelerator being sufficient to trigger the gas evolving reaction prior to triggering and accelerating the gellation and curing reaction of said polyester resin and hydroperoxide polyester curing agent,

the cross linking of the styrene monomer during gellation and curing of said mixture tending to cause shrinkage of said mixture, the generation of said

carbon dioxide gas being sufficient at least to prevent said shrinkage.

29. A method of forming molded articles of unsaturated polyester resin by use of a closed mold comprising

causing gellation and curing of polyester resin by reaction in the mold of a mixture comprising a fluid mass of unsaturated polyester resin and a hydroperoxide polyester curing agent,

c h a r a c t e r i z e d in that

for the purpose of improving the molding cycle

or enabling the improvement of a physical property of the article,

the method comprises employing, throughout said mixture,

a predetermined quantity of isocyanate,

and at least one isocyanate-reactive accelerator that is exothermically reactive with said isocyanate,

the quantity of said isocyanate being selected

to cause reaction with the selected quantity of isocyanate-reactive accelerator to generate heat throughout said mixture, and also

to react prior to gellation of said polyeter resin with at least one component of said mixture to generate carbon dioxide gas to cause formation of small gas bubbles through said mixture,

the heat generated by the reaction between the isocyanate and the accelerator being sufficient to trigger the gas evolving reaction prior to triggering and accelerating the gellation and curing reaction of said polyester resin and hydroperoxide polyester curing agent,

any hydrogen peroxide, water and other ingredients reactive with said isocyanate being

limited in quantity in said mixture such that the preponderant gas-evolving reaction with said isocyanate is the reaction of said isocyanate with said organic hydroperoxide,

any hydrogen peroxide in said mixture being present in a ratio of less than 1 to 7 to the active components of organic hydroperoxide, the predominant linkages formed during the gellation and curing reaction being polyester linkages.

30. The method of claim 29,

c h a r a c t e r i z e d in that

the quantity of any water in said mixture is less than one percent of the resin, by weight.

31. A pre-prepared agent for use in the gellation and cure of unsaturated polyester resin by mixing in selected quantity with polyester resin and a selected quantity of isocyanate,

c h a r a c t e r i z e d in that

said agent comprises the product of combining a selected quantity of an isocyanate-reactive accelerator that is exothermically reactive with said isocyanate and an organic hydroperoxide polyester curing agent,

said agent being reactive with said isocyanate to generate heat throughout the mixture sufficient to accelerate the gellation and curing reaction between said unsaturated polyester resin and the polyester organic hydroperoxide curing agent contained in said pre-prepared agent.

32. The pre-prepared agent of claim 31
c h a r a c t e r i z e d in that
said organic hydroperoxide in said agent, in addition to being reactive with said unsaturated polyester to promote cure of said resin, being available to react with excess isocyanate in the mixture to generate carbon dioxide gas to cause formation of small gas bubbles throughout said mixture for formation of an expanded article.

33. The pre-prepared agent of claims 31 or 32
c h a r a c t e r i z e d in that
the isocyanate-reactive accelerator includes dimethylethanolamine, and the polyester organic hydroperoxide curing agent includes cumene hydroperoxide.

34. A curing agent for a mass of unsaturated polyester resin based upon an organic hydroperoxide
c h a r a c t e r i z e d in that
said curing agent comprises a buffered, equilibrium system of a relatively small quantity of un-ionized hydroperoxide and a salt soluble in said resin formed by the reaction of hydroperoxide and a base.

35. The curing agent of claim 34
c h a r a c t e r i z e d in that
said salt is a hydroperoxide salt of an amine or ammonia.

36. The curing agent of claim 34 or 35
c h a r a c t e r i z e d in that
said agent includes in solution at least one constituent reactive with isocyanate that is present with said polyester to generate heat to accelerate the polyester curing reaction of said agent.

37. The curing agent of claim 36 wherein said constituent is selected from the group consisting of: a tertiary amine having an alcohol functional group with two or more carbon atoms, said alcohol functional group free to react with isocyanate; primary and secondary amines having hydrogen terminations free to react with isocyanate; and alcohols.

38. The curing agent of any of the foregoing claims 31-37 wherein said salt comprises a hydroperoxide salt of dimethylethanolamine.

39. The curing agent of any of the foregoing claims 31-38 wherein said buffered solution is the reaction product of at least two moles of dimethyethanolamine per one mole of cumene hydroperoxide.

0072024

FIG I

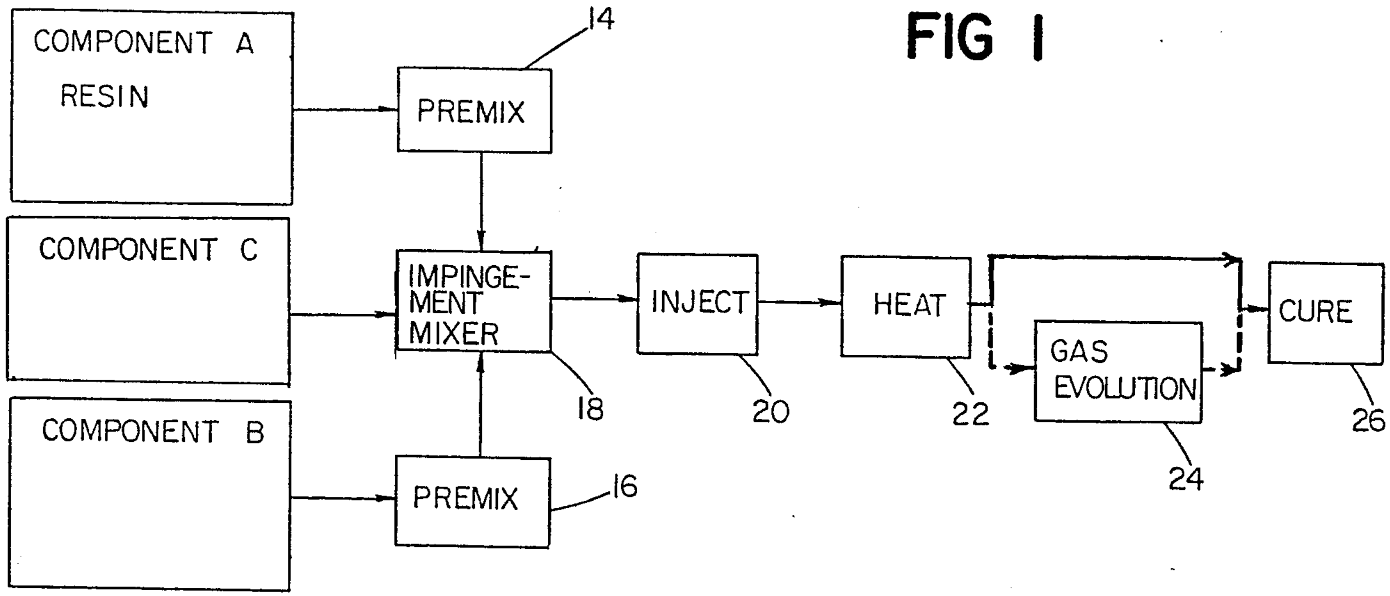


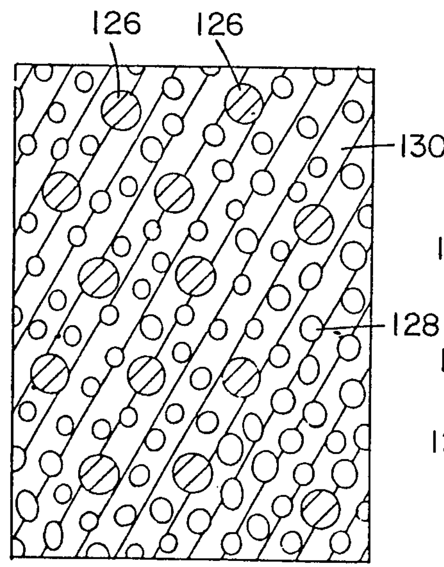


FIG 6

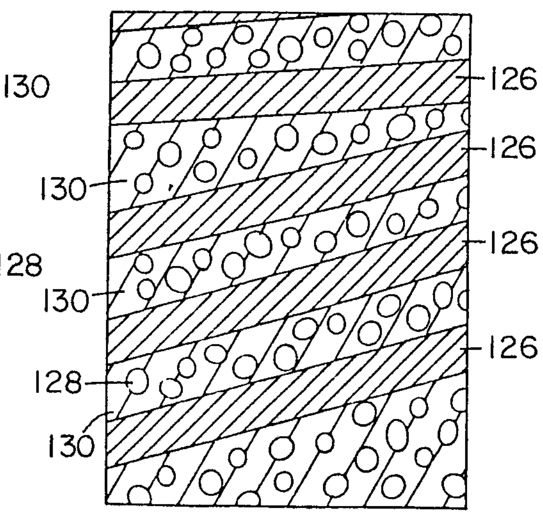


FIG 5

0072024

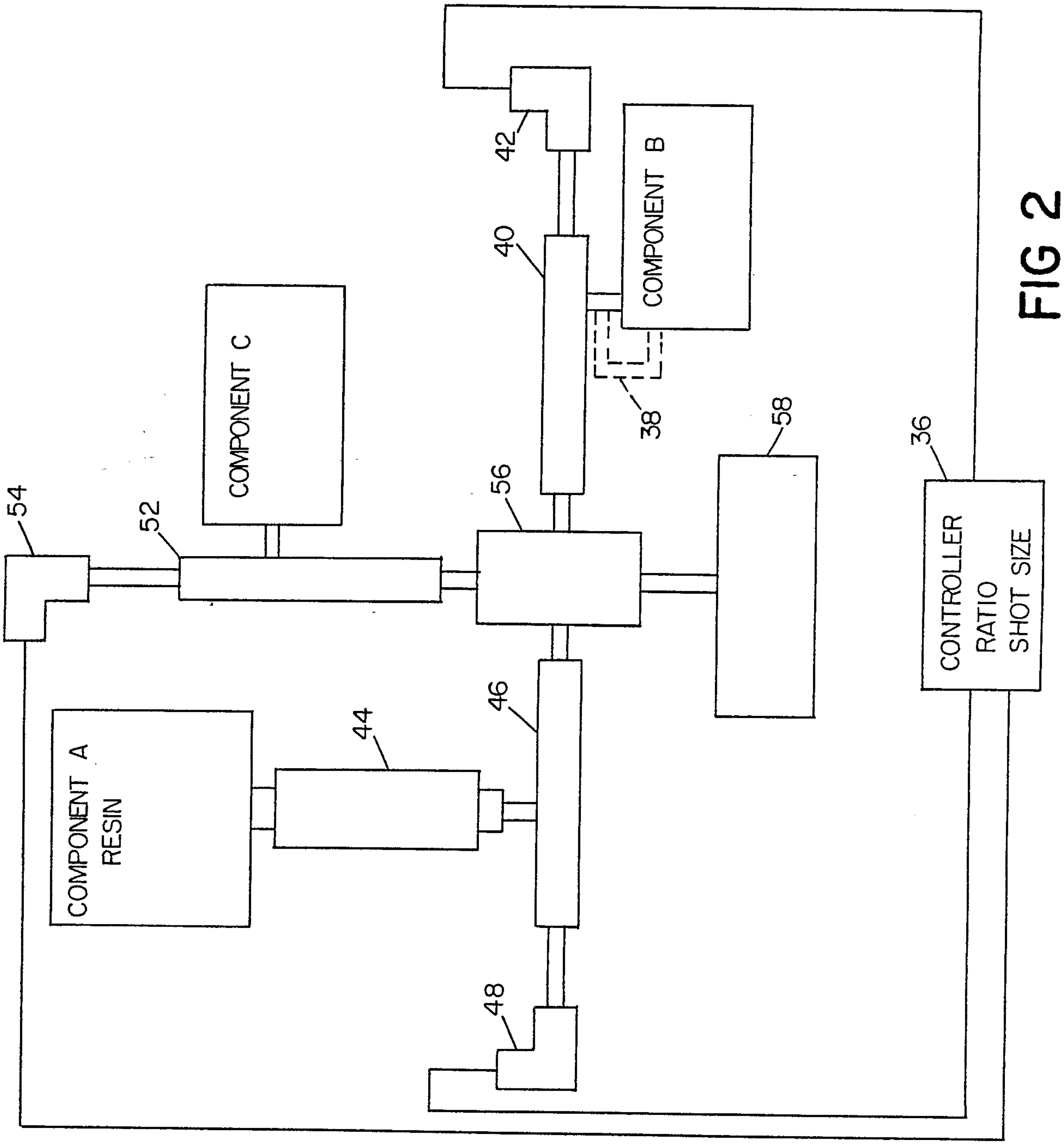


FIG 2

0072024

3/4

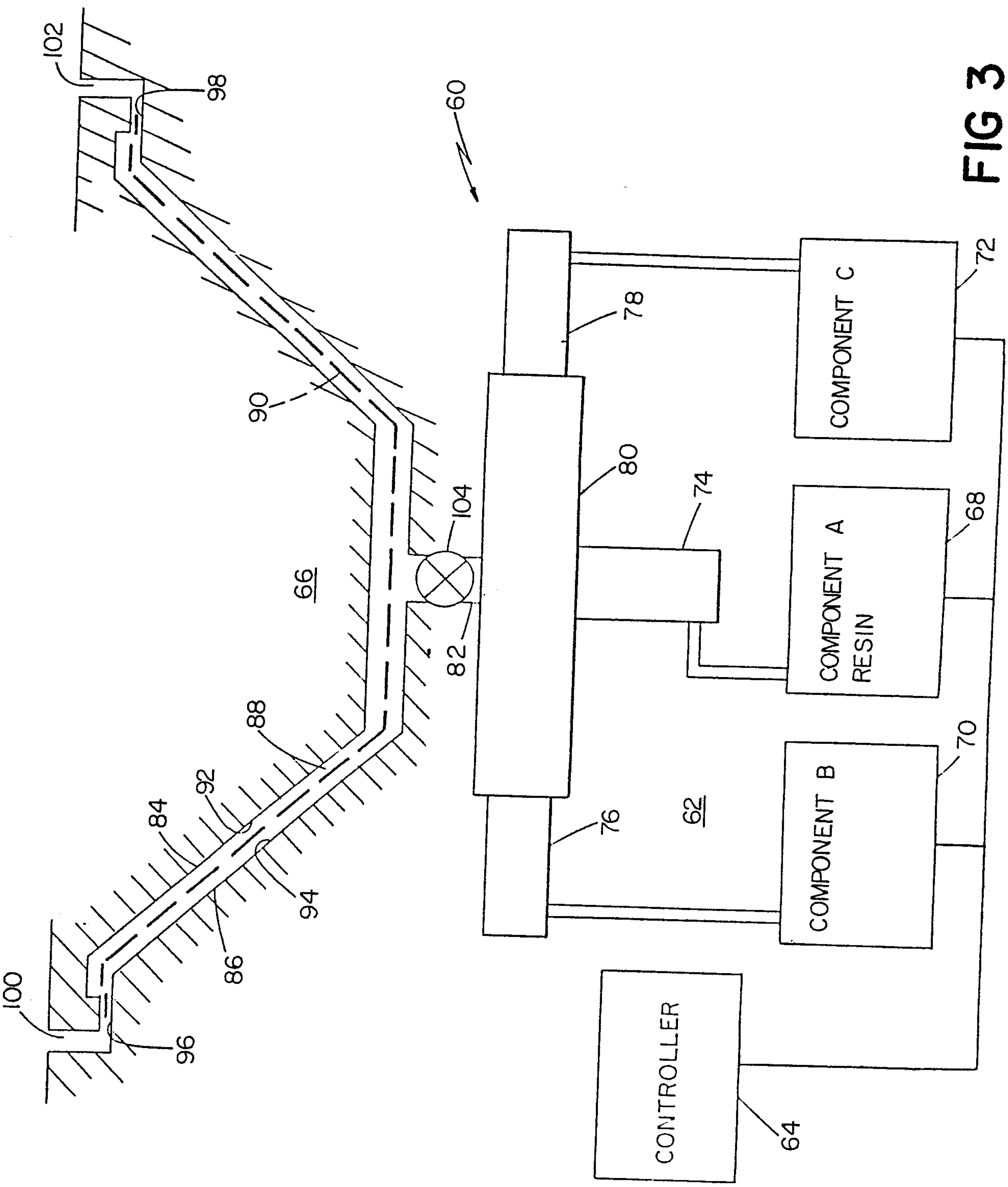


FIG 3

FIG 4

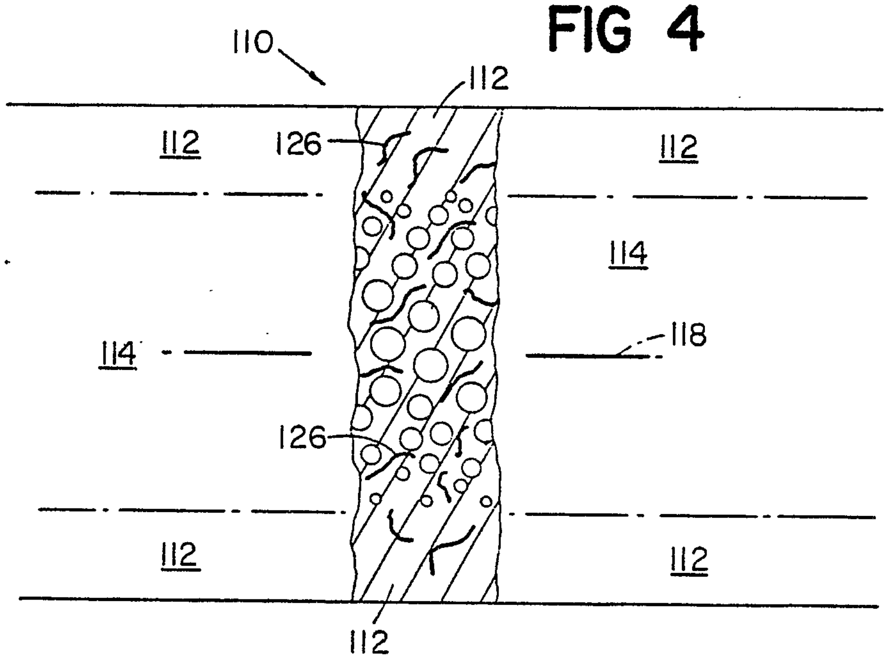


FIG 4a

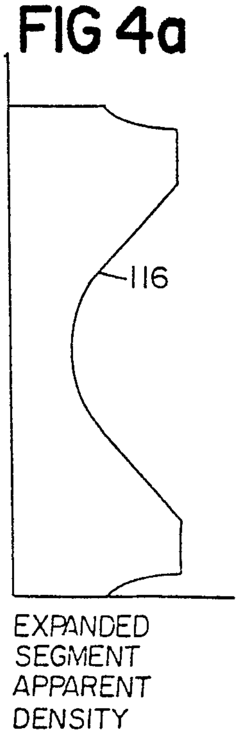


FIG 4b

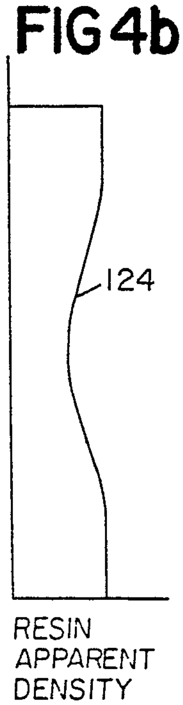


FIG 4c

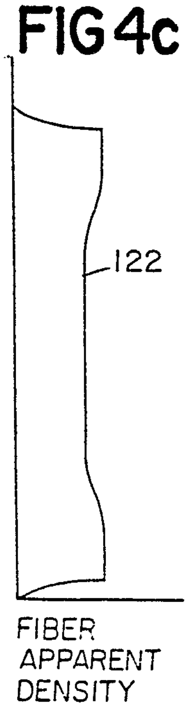


FIG 4d